# DEMANDE DE BREVET EUROPEEN

(11) **EP 4 475 144 A1**
(43) Date de publication de la demande: **11.12.2024**
(21) Numéro de dépôt: 24180383.2
(22) Date de dépôt: 06.06.2024
(51) Int. Cl.: H01B 13/02, B65H 49/18, B65H 49/20, B65H 81/06, F16L 57/06

(54) **INSTALLATION ET PROCÉDÉ DE DÉROULEMENT, PROTECTION ET RÉ-ENROULEMENT D'UN OBJET DE TYPE CANALISATION**

(30) Priorité: 07.06.2023 FR 2305744
(71) Demandeur: Dalaine, Audrey, 56190 Noyal-Muzillac (FR); Dalaine, Jean-Baptiste, 56230 Berric (FR)
(72) Inventeur: Dalaine, Audrey, 56190 Noyal-Muzillac (FR); Dalaine, Jean-Baptiste, 56230 Berric (FR)
(74) Mandataire: IPAZ

(57) **Abrégé**

Technique de déroulement, de protection et de ré-enroulement d'un objet allongé (100) tel qu'une canalisation ou un câble, à l'aide d'une installation (1) comprenant deux porte-tourets (2, 3) disposés tête-bêche, de part et d'autre d'un équipement de gainage (4).

## Description

### Domaine technique

L'invention se rapporte au domaine des techniques de protection d'éléments tels que des canalisations enterrées destinées au transport ou à la distribution d'un fluide ou d'électricité.

De manière générale, l'invention peut être mise en oeuvre pour protéger tout objet allongé de ce type qui présente une flexibilité autorisant un enroulement de cet objet, typiquement sur un touret.

### État de la technique antérieure

Les brevets délivrés sous les numéros EP 1 781 978 et EP 2 327 833 décrivent des techniques permettant de protéger des canalisations avec un revêtement en matériau géotextile.

Les techniques connues pour protéger une canalisation enterrée sont généralement prévues pour réaliser une opération de gainage sur le chantier, afin de pouvoir enfouir la canalisation ainsi protégée au fur et à mesure de l'avancement des opérations d'excavation et de remblaiement.

Il existe un besoin de réduire les temps de manutention associés aux techniques de gainage conventionnelles.

### Exposé de l'invention

À cet effet, l'invention a pour objet une installation pour dérouler, protéger et ré-enrouler un objet allongé tel qu'une canalisation ou un câble, comprenant :
- un premier porte-touret comprenant deux premiers tambours configurés afin de coopérer avec un premier touret en vue d'un entraînement mutuel en rotation,
- un deuxième porte-touret comprenant deux deuxièmes tambours configurés afin de coopérer avec un deuxième touret en vue d'un entraînement mutuel en rotation,
- un mécanisme d'actionnement configuré pour entraîner l'un au moins desdits deuxièmes tambours en rotation,
- un équipement de gainage.

L'installation est configurée de sorte que, dans un mode d'utilisation dans lequel les premiers tambours coopèrent avec ledit premier touret sur lequel est enroulé ledit objet et dans lequel les deuxièmes tambours coopèrent avec ledit deuxième touret, le mécanisme d'actionnement entraîne l'un au moins desdits deuxièmes tambours en rotation de manière à pouvoir progressivement dérouler ledit objet du premier touret, envelopper d'une gaine l'objet ainsi déroulé à l'aide de l'équipement de gainage et enrouler l'objet ainsi gainé sur le deuxième touret.

L'invention procure ainsi une solution permettant, lors d'une même opération, de dérouler l'objet, le protéger et le ré-enrouler avec sa protection autour d'un touret.

L'installation est particulièrement adaptée pour être mise en oeuvre dans un atelier, l'objet avec sa gaine de protection enroulé sur le touret pouvant ainsi être stocké et livré sur le chantier pour être directement enfoui.

L'invention permet ainsi d'éliminer les temps de transport et de manutention pour installer et retirer l'installation du chantier, ces temps de manutention pouvant être jusqu'à trois fois supérieurs au temps nécessaire pour gainer l'objet.

En mettant l'installation en oeuvre en atelier, les risques de pollution environnementale sont en outre réduits.

Les premiers tambours sont de préférence configurés afin de coopérer avec ledit premier touret de manière à réaliser un entraînement tangentiel.

De manière analogue, les deuxièmes tambours sont de préférence configurés afin de coopérer avec ledit deuxième touret de manière à réaliser un entraînement tangentiel.

Un entraînement tangentiel permet de simplifier l'installation et, en particulier, la structure des porte-tourets qui peuvent notamment être rendus plus compacts.

En particulier, chacun des porte-tourets peut comprendre un simple châssis portant les deux tambours correspondants, formant une structure de hauteur relativement faible sur laquelle il suffit de disposer un touret.

Bien entendu, les porte-tourets peuvent comprendre des moyens de réglage de la position des tambours, par exemple en vue de les adapter à des tourets de différentes dimensions.

L'invention permet d'utiliser l'installation selon plusieurs modes d'utilisation, qui peuvent être mis en oeuvre de manière successive.

Ainsi, le mode d'utilisation précité peut être un premier mode d'utilisation.

De manière non limitative, l'installation peut être utilisée suivant un deuxième mode d'utilisation aux fins duquel il est préféré que le mécanisme d'actionnement soit configuré pour entraîner l'un au moins desdits premiers tambours en rotation. Dans ce deuxième mode d'utilisation, les premiers tambours coopèrent avec ledit premier touret et les deuxièmes tambours coopèrent avec ledit deuxième touret sur lequel est enroulé ledit objet.

Dans un mode de réalisation, l'installation est configurée de sorte que, dans ledit deuxième mode d'utilisation, le mécanisme d'actionnement entraîne l'un au moins desdits premiers tambours en rotation de manière à pouvoir progressivement dérouler ledit objet du deuxième touret, envelopper d'une gaine l'objet ainsi déroulé à l'aide de l'équipement de gainage et enrouler l'objet ainsi gainé sur le premier touret.

Ainsi, l'installation est réversible, compte tenu de l'agencement des porte-tourets, qui sont ainsi placés tête-bêche.

Chacun des modes d'utilisation peut en outre comprendre plusieurs phases, incluant de manière non limitative une première phase dans laquelle l'objet enroulé sur l'un des tourets est déroulé de manière à être relié à l'autre touret, suivie d'une deuxième phase dans laquelle l'objet est enroulé sur ce dernier touret de la manière décrite ci-dessus.

La première phase peut être réalisée en entraînant le touret sur lequel est enroulé l'objet à protéger, par actionnement de l'un au moins des tambours du porte-touret supportant ce touret.

Dans un mode de réalisation, le mécanisme d'actionnement comprend un ou plusieurs moteurs.

De préférence, un ou plusieurs desdits moteurs est électrique.

Dans un mode de réalisation, le premier porte-touret et le deuxième porte-touret sont agencés de sorte que les premiers tambours et les deuxièmes tambours aient des axes de rotation respectifs parallèles.

Selon une première variante de réalisation, l'équipement de gainage comprend une spiraleuse.

Selon une deuxième variante de réalisation, l'équipement de gainage comprend un dispositif de thermo-soudage.

Ces variantes peuvent être combinées et l'équipement de gainage peut comprendre, de manière alternative ou complémentaires, d'autres dispositifs ou moyens de fixation.

Selon un autre aspect, l'invention a aussi pour objet un procédé de déroulement, de protection et de ré-enroulement d'un objet allongé tel qu'une canalisation ou un câble, à l'aide d'une installation telle que définie ci-dessus.

De préférence, le procédé comprend :
- une étape de fourniture dudit objet enroulé sur un premier touret et d'une gaine,
- une étape de disposition du premier touret sur les premiers tambours de l'installation,
- une étape de disposition d'un deuxième touret sur les deuxièmes tambours de l'installation,
- une étape d'actionnement d'au moins un desdits deuxièmes tambours à l'aide du mécanisme d'actionnement de l'installation, de manière à progressivement dérouler ledit objet du premier touret, envelopper l'objet ainsi déroulé avec la gaine à l'aide de l'équipement de gainage de l'installation et enrouler l'objet ainsi gainé sur le deuxième touret.

Dans un mode de réalisation, le procédé comprend, après ladite étape d'actionnement :
- une étape de remplacement du deuxième touret, sur lequel l'objet gainé est enroulé, par un troisième touret sur lequel est enroulé un nouvel objet à protéger,
- une étape d'actionnement de l'un au moins desdits premiers tambours à l'aide dudit mécanisme d'actionnement, de manière à progressivement dérouler ledit nouvel objet du troisième touret, envelopper le nouvel objet ainsi déroulé avec la gaine à l'aide de l'équipement de gainage et enrouler le nouvel objet ainsi gainé sur le premier touret.

De manière non limitative, ladite gaine peut comprendre un géotextile.

À titre indicatif, la gaine peut être conforme à l'une quelconque des variantes de gaines décrites dans le brevet délivré sous le numéro EP 1 781 978.

Dans un mode de réalisation, l'enveloppement dudit objet avec la gaine comprend une fixation de la gaine à l'aide d'une spiraleuse et/ou par thermo-soudage et/ou par fixation de type autogrippante, par exemple à l'aide d'un ruban adhésif double-face.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :

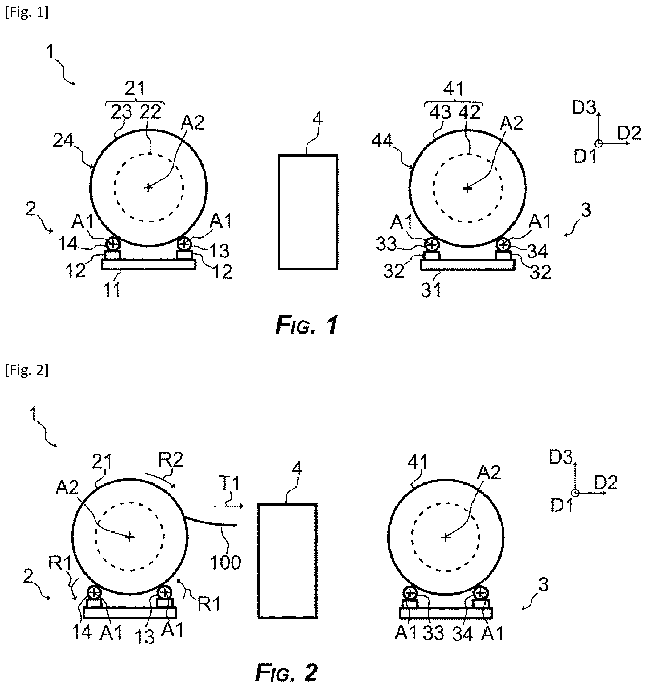

- [Fig. 1] est une vue schématique d'un ensemble comprenant d'une part une installation conforme à l'invention et, d'autre part, deux tourets, l'installation comprenant deux porte-tourets disposés tête-bêche et un équipement de gainage disposé entre les porte-tourets, chacun des porte-tourets comprenant deux tambours sur lesquels est disposé l'un respectif des tourets ;
- [Fig. 2] est une vue schématique de l'ensemble de la figure 1, dans une première configuration dans laquelle une extrémité d'un câble enroulé sur un premier desdits tourets, situé vers la gauche de la figure, est déplacé en direction d'un deuxième desdits tourets, situé vers la droite de la figure, par actionnement d'un tambour supportant le premier touret ;

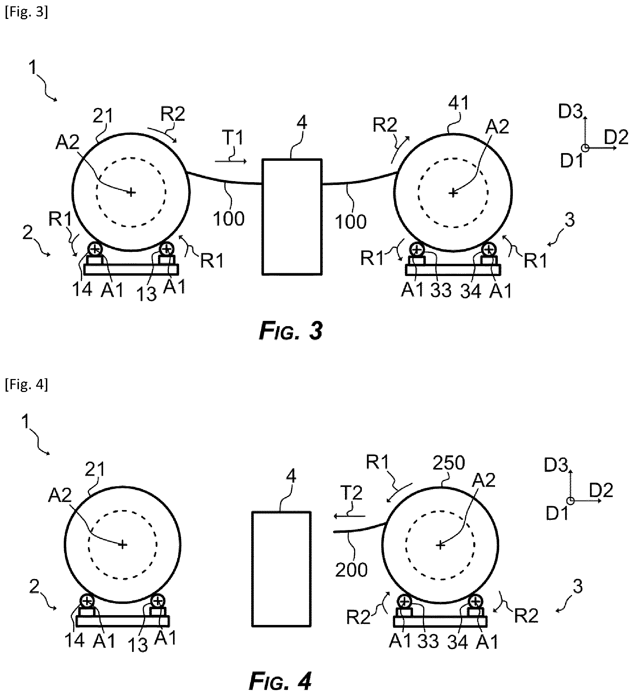

- [Fig. 3] est une vue schématique de l'ensemble de la figure 1, dans une deuxième configuration dans laquelle le câble est déroulé du premier touret, protégé par l'équipement de gainage et enroulé sur le deuxième touret par actionnement d'un tambour supportant le deuxième touret ;
- [Fig. 4] est une vue schématique de l'ensemble de la figure 1, dans une troisième configuration qui se distingue de celle de la figure 2 en ce que le câble est initialement enroulé sur le touret situé vers la droite de la figure ;

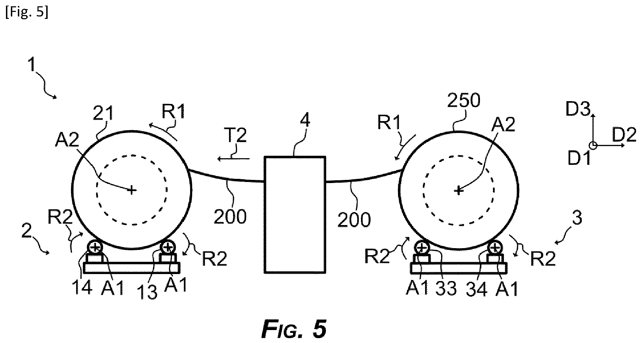

- [Fig. 5] est une vue schématique de l'ensemble de la figure 1, dans une quatrième configuration qui se distingue de celle de la figure 3 en ce que le câble est déroulé du touret situé vers la droite de la figure, protégé par l'équipement de gainage et enroulé sur le touret situé vers la gauche de la figure par actionnement d'un tambour supportant ce dernier touret.

### Description détaillée de modes de réalisation

Une installation 1 conforme à l'invention est représentée à la figure 1.

La figure 1 comprend un référentiel indiquant des directions D1, D2 et D3 orthogonales. Dans cet exemple, la direction D3 est verticale.

L'installation 1 comprend des porte-tourets 2 et 3 et un équipement de gainage 4.

Dans cet exemple non limitatif, le porte-touret 2 comprend un châssis 11, quatre paliers 12 (deux desquels n'étant pas visibles sur la figure 1) et deux tambours 13 et 14.

Les paliers 12 sont ici des paliers à semelle portés par le châssis 11.

Chacun des tambours 13 et 14 s'étend le long d'un axe longitudinal A1 respectif, parallèle à la direction D1, en formant deux extrémités qui coopèrent chacune avec l'un respectif des paliers 12.

De manière connue en soi, les paliers 12 sont configurés pour assurer un guidage en rotation des tambours 13 et 14 autour de leur axe A1 respectif, relativement au châssis 11.

Dans cet exemple, les tambours 13 et 14 sont dimensionnés et espacés l'un de l'autre selon la direction D2 de manière à pouvoir y disposer un touret 21 tel qu'illustré à la figure 1.

Le touret 21 est dans cet exemple un touret de câble conventionnel. De manière connue en soi, le touret 21 comprend une partie centrale 22 (représentée en pointillés sur la figure 1) s'étendant autour d'un axe A2, ainsi que deux parois latérales 23 (une seule paroi 23 étant visible à la figure 1) espacées l'une de l'autre le long de l'axe A2. Chacune des parois latérales 23 comprend une surface périphérique 24 qui s'étend circonférentiellement autour de l'axe A2. La partie centrale 22 et les parois latérales 23 sont chacune sensiblement cylindriques et dimensionnées de sorte que les parois latérales 23 aient un diamètre supérieur au diamètre de la partie centrale 22.

Dans la configuration de la figure 1, les parois latérales 23 du touret 21 sont en appui sur les tambours 13 et 14 par leur surface périphérique 24, de sorte que l'axe A2 du touret 21 soit parallèle, ou sensiblement parallèle, à l'axe A1 de chacun des tambours 13 et 14.

Ainsi, les tambours 13 et 14 coopèrent avec le touret 21 de manière à pouvoir réaliser un entraînement tangentiel mutuel en rotation, en particulier autour des axes A1 pour les tambours 13 et 14 et autour de l'axe A2 pour le touret 21.

Dans cet exemple, l'installation 1 comprend un mécanisme d'actionnement (non représenté) pourvu d'un premier moteur électrique ayant un arbre de sortie couplé en rotation avec le tambour 13, afin de pouvoir entraîner le tambour 13 en rotation autour de son axe A1.

Les tambours 13 et 14 sont dans cet exemple reliés l'un à l'autre par une courroie ou chaîne de transmission (non représentée) configurée pour transmettre au tambour 14 une rotation du tambour 13.

Concernant le porte-touret 3, celui-ci comprend lui aussi un châssis 31, quatre paliers 32 et deux tambours 33 et 34 formant un ensemble similaire au porte-touret 2 et étant configuré pour recevoir un touret 41 semblable au touret 21. Notamment, le touret 41 comprend lui aussi une partie centrale 42 et deux parois latérales 43 qui présentent une surface périphérique 44 s'étendant circonférentiellement autour d'un axe A2 de ce touret 41.

La description qui précède, relative au porte-touret 2 et au touret 21, s'applique par analogie au porte-touret 3 et au touret 41.

Dans cet exemple, le mécanisme d'actionnement comprend un deuxième moteur électrique (non représenté) ayant un arbre de sortie couplé en rotation avec le tambour 33, afin de pouvoir entraîner le tambour 33 en rotation autour de son axe A1.

Les tambours 33 et 34 sont eux aussi reliés l'un à l'autre par une courroie ou chaîne de transmission (non représentée) configurée pour transmettre au tambour 34 une rotation du tambour 33.

L'installation 1 est agencée de sorte que les porte-tourets 2 et 3 soient agencés tête-bêche, de part et d'autre de l'équipement de gainage 4 selon la direction D2, de manière à pouvoir enrouler sur le touret supporté par l'un de ces porte-tourets un objet allongé initialement enroulé sur un touret supporté par l'autre porte-touret (voir plus loin ci-dessous).

Dans l'exemple de la figure 1, les axes A1 des tambours 13, 14, 33 et 34 sont parallèles, ou sensiblement parallèles.

De manière non limitative, l'équipement de gainage 4 comprend dans cet exemple un dispositif de conformation (non représenté) ainsi qu'un dispositif appelé « spiraleuse » (non représenté) tels que décrits dans le brevet délivré sous le numéro EP 1 781 978. De manière connue en soi, le dispositif de conformation est configuré pour disposer une gaine sur un objet en déplacement relatif par rapport au dispositif de conformation, tandis que la spiraleuse est configurée pour fixer la gaine ainsi disposée en entourant la gaine avec un ou plusieurs rubans ou avec un ou plusieurs fils tendus en hélice autour de la gaine.

L'équipement de gainage 4 comprend à cet effet une bobine (non représentée) sur laquelle est enroulée ladite gaine.

Dans cet exemple, la gaine se présente sous la forme d'une bande en matériau géotextile.

De manière non limitative, cette bande comprend une nappe formée d'une couche en matériau non tissé, telle que définie dans le brevet précité.

Il va maintenant être décrit un premier mode d'utilisation de l'installation 1 de la figure 1, à partir d'une configuration initiale dans laquelle un objet à protéger, qui est dans cet exemple un câble 100, est complètement enroulé sur le touret 21.

Le premier mode d'utilisation comprend dans cet exemple deux phases.

En référence à la figure 2, une première phase consiste à dérouler le câble 100 du touret 21 en déplaçant l'une de ses extrémités jusqu'au touret 41 en vue de la solidariser avec ce touret 41, de la manière décrite ci-dessous.

Lors de cette première phase, le premier moteur est actionné pour entraîner le tambour 13 en rotation autour de son axe A1 dans un sens de rotation R1. La rotation du tambour 13 entraîne, via la courroie ou chaîne de transmission correspondante, le tambour 14 en rotation dans le même sens R1. Les tambours 13 et 14 permettent ainsi d'entraîner le touret 21 en rotation autour de son axe A2 dans un sens de rotation R2 opposé au sens R1, par entraînement tangentiel.

Une telle rotation du touret 21 permet de déplacer le câble 100 dans un sens d'avancement T1 selon D2, dirigé du porte-touret 2 vers le porte-touret 3, de sorte que ladite extrémité du câble 100 atteigne le touret 41 en passant par l'équipement de gainage 4.

L'équipement de gainage 4 est mis en oeuvre de manière à envelopper les parties du câble 100 qui le traversent.

Lorsque l'extrémité du câble 100 arrive ainsi au niveau du touret 41, avec une longueur de déroulement du touret 21 permettant de la fixer au touret 41, la rotation de l'arbre de sortie du premier moteur est interrompue.

Lors de cette première phase, le guidage du câble 100 et la fixation de son extrémité au touret 41 sont dans cet exemple réalisés manuellement par un ou plusieurs opérateurs.

En référence à la figure 3, une deuxième phase est mise en oeuvre afin d'enrouler sur le touret 41 le câble 100 gainé par l'équipement 4.

Pour ce faire, le deuxième moteur est actionné pour entraîner le tambour 33 en rotation autour de son axe A1 dans le sens de rotation R1. La rotation du tambour 33 entraîne, via la courroie ou chaîne de transmission correspondante, le tambour 34 en rotation dans le même sens R1. Les tambours 33 et 34 permettent ainsi d'entraîner le touret 41 en rotation autour de son axe A2 dans le sens de rotation R2 opposé, par entraînement tangentiel.

Lors de cette deuxième phase, les tambours 13 et 14 sont en roue libre et sont entraînés en rotation dans le sens R1 sous l'action de la rotation du touret 21 dans le sens R2.

Lors de cette opération, le touret 41 peut ainsi tracter le câble 100 dans le sens d'avancement T1, de manière à progressivement le dérouler du touret 21, l'envelopper de la gaine à son passage dans l'équipement de gainage 4, et enrouler le câble 100 ainsi gainé sur le touret 41.

Dans le premier mode d'utilisation qui vient d'être décrit, le porte-touret 2 assure une fonction de dévidage ou déroulement, tandis que le porte-touret 3 assure une fonction d'enroulement.

Il va maintenant être décrit un deuxième mode d'utilisation de l'installation 1 de la figure 1, à partir d'une configuration dans laquelle un objet à protéger, qui dans cet exemple est aussi un câble 200, est complètement enroulé sur un touret 250 disposé sur le porte-touret 3.

De manière non limitative, le touret 250 peut être disposé sur le porte-touret 3 en remplacement du touret 41 à l'issue d'une opération telle que décrite ci-dessus selon ledit premier mode d'utilisation.

En résumé, dans le deuxième mode d'utilisation, le porte-touret 2 assure une fonction d'enroulement, tandis que le porte-touret 3 assure une fonction de dévidage ou déroulement.

Dans cet exemple, le deuxième mode d'utilisation comprend deux phases analogues aux deux phases du premier mode d'utilisation.

Ainsi, en référence à la figure 4, une première phase consiste à dérouler le câble 200 du touret 250 en déplaçant l'une de ses extrémités jusqu'au touret 21 afin de la solidariser avec ce touret 21.

Lors de cette première phase, le deuxième moteur est actionné pour entraîner le tambour 33 en rotation autour de son axe A1 dans le sens R2. La rotation du tambour 33 entraîne, via la courroie ou chaîne de transmission correspondante, le tambour 34 en rotation dans le même sens R2. Les tambours 33 et 34 permettent ainsi d'entraîner le touret 250 en rotation autour de son axe A2 dans le sens R1, par entraînement tangentiel.

Une telle rotation du touret 250 permet de déplacer le câble 200 dans un sens d'avancement T2 selon D2, opposé au sens T1, allant du porte-touret 3 vers le porte-touret 2, de sorte que ladite extrémité du câble 200 traverse l'équipement de gainage 4 et atteigne le touret 21.

L'équipement de gainage 4 est mis en oeuvre de manière à envelopper les parties du câble 200 qui le traversent.

Lorsque l'extrémité du câble 200 arrive ainsi au niveau touret 21, avec une longueur de déroulement du touret 250 permettant de fixer le câble 200 au touret 21, la rotation de l'arbre de sortie du deuxième moteur est interrompue.

Lors de cette première phase, le guidage du câble 200 et la fixation de son extrémité au touret 21 sont réalisés manuellement par un ou plusieurs opérateurs.

En référence à la figure 5, la deuxième phase permet d'enrouler le câble 200 gainé sur le touret 21.

Pour ce faire, le premier moteur est actionné pour entraîner le tambour 13 en rotation autour de son axe A1 dans le sens R2. La rotation du tambour 13 entraîne, via la courroie ou chaîne de transmission correspondante, le tambour 14 en rotation dans le même sens R2. Les tambours 13 et 14 permettent ainsi d'entraîner le touret 21 en rotation autour de son axe A2 dans le sens R1, par entraînement tangentiel.

Lors de cette deuxième phase, les tambours 33 et 34 sont en roue libre et sont entraînés en rotation dans le sens R2 sous l'action de la rotation du touret 250 dans le sens R1.

Le câble 200 est ainsi tracté par le touret 21 dans le sens d'avancement T2, de manière à progressivement le dérouler du touret 250, l'envelopper de la gaine à son passage dans l'équipement de gainage 4, et enrouler le câble 200 ainsi gainé sur le touret 21.

L'invention permet ainsi de gainer le câble 100, 200 en enroulant progressivement le câble ainsi protégé autour d'un touret, ce qui permet son stockage sous forme de bobine qui peut être livrée telle quelle sur un chantier.

De nombreuses variantes peuvent être apportées à l'installation et aux exemples de mises en oeuvre qui viennent d'être décrits. Notamment, l'objet à protéger peut être une canalisation destinée à acheminer un fluide ou plus généralement un objet allongé susceptible d'être enroulé.

Concernant le gainage, le revêtement de protection peut comprendre un matériau différent de celui indiqué ci-dessus et sa fixation peut être réalisée par un dispositif autre qu'une spiraleuse, par exemple à l'aide d'un dispositif de thermo-soudage ou d'une technique de fixation utilisant un ruban, connu sous le nom « Velcro » (marque déposée), double-face.

Concernant le mécanisme d'actionnement, celui-ci peut comprendre un ou plusieurs moteurs électriques, comme décrit ci-dessus, qui peuvent être alimentés par le secteur ou par un générateur. À titre d'exemple alternatif non limitatif, des actionneurs hydrauliques peuvent être utilisés.

Le mécanisme d'actionnement peut par ailleurs être configuré pour entraîner un ou plusieurs tambours de l'installation selon d'autres combinaisons que celles décrites ci-dessus. Par exemple, un tambour de l'un des porte-tourets peut être actionné en même temps qu'un tambour d'un autre porte-touret, éventuellement à l'aide d'un unique moteur et d'un mécanisme de transmission approprié.

## Revendications

1. Installation (1) pour dérouler, protéger et ré-enrouler un objet allongé (100) tel qu'une canalisation ou un câble, comprenant :
- un premier porte-touret (2) comprenant deux premiers tambours (13, 14) configurés afin de coopérer avec un premier touret (21) en vue d'un entraînement mutuel en rotation,
- un deuxième porte-touret (3) comprenant deux deuxièmes tambours (33, 34) configurés afin de coopérer avec un deuxième touret (41) en vue d'un entraînement mutuel en rotation,
- un mécanisme d'actionnement configuré pour entraîner l'un au moins desdits deuxièmes tambours (33, 34) en rotation,
- un équipement de gainage (4),
l'installation (1) étant configurée de sorte que, dans un mode d'utilisation dans lequel les premiers tambours (13, 14) coopèrent avec ledit premier touret (21) sur lequel est enroulé ledit objet (100) et dans lequel les deuxièmes tambours (33, 34) coopèrent avec ledit deuxième touret (41), le mécanisme d'actionnement entraîne l'un au moins desdits deuxièmes tambours (33, 34) en rotation de manière à pouvoir progressivement dérouler ledit objet (100) du premier touret (21), envelopper d'une gaine l'objet (100) ainsi déroulé à l'aide de l'équipement de gainage (4) et enrouler l'objet (100) ainsi gainé sur le deuxième touret (41).

2. Installation (1) selon la revendication 1, dans laquelle les premiers, respectivement deuxièmes, tambours (13, 14 ; 33, 34) sont configurés afin de coopérer avec ledit premier, respectivement deuxième, touret (21 ; 41) de manière à réaliser un entraînement tangentiel.

3. Installation (1) selon la revendication 1 ou 2, dans laquelle le mécanisme d'actionnement est configuré pour entraîner l'un au moins desdits premiers tambours (13, 14) en rotation, ledit mode d'utilisation étant un premier mode d'utilisation, l'installation (1) étant configurée de sorte que, dans un deuxième mode d'utilisation dans lequel les premiers tambours (13, 14) coopèrent avec ledit premier touret (21) et dans lequel les deuxièmes tambours (33, 34) coopèrent avec ledit deuxième touret (250) sur lequel est enroulé ledit objet (200), le mécanisme d'actionnement entraîne l'un au moins desdits premiers tambours (13, 14) en rotation de manière à pouvoir progressivement dérouler ledit objet (200) du deuxième touret (250), envelopper d'une gaine l'objet (200) ainsi déroulé à l'aide de l'équipement de gainage (4) et enrouler l'objet (200) ainsi gainé sur le premier touret (21).

4. Installation (1) selon l'une quelconque des revendications 1 à 3, dans laquelle le mécanisme d'actionnement comprend un ou plusieurs moteurs, de préférence électriques.

5. Installation (1) selon l'une quelconque des revendications 1 à 4, dans laquelle le premier porte-touret (2) et le deuxième porte-touret (3) sont agencés de sorte que les premiers tambours (13, 14) et les deuxièmes tambours (33, 34) aient des axes de rotation (A1) respectifs parallèles.

6. Installation (1) selon l'une quelconque des revendications 1 à 5, dans laquelle l'équipement de gainage (4) comprend une spiraleuse et/ou un dispositif de thermo-soudage.

7. Procédé de déroulement, de protection et de ré-enroulement d'un objet allongé (100) tel qu'une canalisation ou un câble, à l'aide d'une installation (1) selon l'une quelconque des revendications 1 à 6, comprenant :
- une étape de fourniture dudit objet (100) enroulé sur un premier touret (21) et d'une gaine,
- une étape de disposition du premier touret (21) sur les premiers tambours (13, 14) de l'installation (1),
- une étape de disposition d'un deuxième touret (41) sur les deuxièmes tambours (33, 34) de l'installation (1),
- une étape d'actionnement d'au moins un desdits deuxièmes tambours (33, 34) à l'aide du mécanisme d'actionnement de l'installation (1), de manière à progressivement dérouler ledit objet (100) du premier touret (21), envelopper l'objet (100) ainsi déroulé avec la gaine à l'aide de l'équipement de gainage (4) de l'installation (1) et enrouler l'objet (100) ainsi gainé sur le deuxième touret (41).

8. Procédé selon la revendication 7, comprenant, après ladite étape d'actionnement :
- une étape de remplacement du deuxième touret (41), sur lequel l'objet (100) gainé est enroulé, par un troisième touret (250) sur lequel est enroulé un nouvel objet (200) à protéger,
- une étape d'actionnement de l'un au moins desdits premiers tambours (13, 14) à l'aide dudit mécanisme d'actionnement, de manière à progressivement dérouler ledit nouvel objet (200) du troisième touret (250), envelopper le nouvel objet (200) ainsi déroulé avec la gaine à l'aide de l'équipement de gainage (4) et enrouler le nouvel objet (200) ainsi gainé sur le premier touret (21).

9. Procédé selon la revendication 7 ou 8, dans lequel ladite gaine comprend un géotextile.

10. Procédé selon l'une quelconque des revendications 7 à 9, mis en oeuvre avec l'installation (1) pourvue des caractéristiques de la revendication 6, dans lequel l'enveloppement dudit objet (100) avec la gaine comprend une fixation de la gaine à l'aide d'une spiraleuse et/ou par thermo-soudage et/ou par fixation de type autogrippante, par exemple à l'aide d'un ruban adhésif double-face.
